(19) **Europäisches Patentamt**
**European Patent Office**
**Office européen des brevets**

(11) **EP 4 297 400 A1**

(12) **EUROPEAN PATENT APPLICATION**

(43) Date of publication:
**27.12.2023 Bulletin 2023/52**

(21) Application number: **22180394.3**

(22) Date of filing: **22.06.2022**

(51) International Patent Classification (IPC):
**H04N 13/117** (2018.01)     **H04N 13/178** (2018.01)
**H04N 13/194** (2018.01)

(52) Cooperative Patent Classification (CPC):
**H04N 13/117; H04N 13/178; H04N 13/194**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventor: **KROON, Bart**
**Eindhoven (NL)**

(74) Representative: **Philips Intellectual Property & Standards**
**High Tech Campus 52**
**5656 AG Eindhoven (NL)**

(54) **DATA SIGNAL COMPRISING A REPRESENTATION OF A THREE DIMENSIONAL SCENE**

(57)     An apparatus generates a data signal comprising three dimensional image data providing a representation of a three dimensional scene. The three dimensional image data includes at least one image providing visual data for the scene. The data signal further comprises a Lambertian indication for an image region of the image where the Lambertian indication is indicative of a level of Lambertianness of the image region. A rendering apparatus comprises a receiver (201) receiving the data signal and a renderer (203) generates a view image of the scene from a view pose from the three dimensional image data in dependence on the Lambertian indication. Specifically, blending of contributions from different points of the scene to a given pixel of the view image may be dependent on the Lambertian indication. The Lambertian indication may be indicative of view dependency for scene points represented by the image region.

**FIG. 2**

**Description**

FIELD OF THE INVENTION

The invention relates to a data signal comprising a representation of a three dimensional scene, an apparatus and method for generating such a data signal, and an apparatus and method for rendering a view image based on such a data signal. The invention may in particular, but not exclusively, relate to a data signal providing a three dimensional video signal, such as e.g. for immersive video.

BACKGROUND OF THE INVENTION

The variety and range of image and video applications have increased substantially in recent years with new services and ways of utilizing and consuming video being continuously developed and introduced.

For example, one service being increasingly popular is the provision of image sequences in such a way that the viewer is able to actively and dynamically interact with the system to change parameters of the rendering. A very appealing feature in many applications is the ability to change the effective viewing position and viewing direction of the viewer, such as for example allowing the viewer to move and look around in the scene being presented.

Such a feature can specifically allow a virtual reality experience to be provided to a user. This may allow the user to e.g. (relatively) freely move about in a virtual environment and dynamically change his position and where he is looking. Typically, such Virtual Reality (VR) applications are based on a three-dimensional model of the scene with the model being dynamically evaluated to provide the specific requested view. This approach is well known from e.g. game applications, such as in the category of first person shooters, for computers and consoles. Other examples include Augmented Reality (AR) or Mixed Reality (MR) applications.

An example of a video service or application that has been proposed is immersive video where video is played-back on e.g. a VR headset to provide a three-dimensional experience. For immersive video, the viewer has freedom to look and move around in the presented scene such that this may be perceived as being viewed from different viewpoints. However, in many typical approaches, the amount of movement is limited, e.g. to a relatively small area around a nominal viewpoint which may typically correspond to a viewpoint from which the video capture of the scene has been performed. In such applications, three dimensional scene information is often provided that allows high quality view image synthesis for viewpoints that are relatively close to the reference viewpoint(s) but which deteriorates if the viewpoint deviates too much from the reference viewpoints.

Immersive video may also often be referred to as 6-degrees-of-freedom (6DoF) or three dimensional video. MPEG Immersive Video (MIV) is an emerging standard where meta-data is used on top of existing video codecs to enable and standardize immersive video.

A number of different representations have been developed and standardized to allow efficient data description of a scene to allow view images to be generated for different view poses.

An often used approach for representing a scene is known as a multi-view with depth (MVD) representation and capture. In such an approach, the scene is represented by a plurality of images with associated depth data where the images represent different view poses from typically a limited capture region. The images may in practice be captured by using a camera rig comprising plurality of cameras and depth sensors.

Other examples of representations include for example point cloud, multi-planar images, multi-spherical images, and densely sampled volume representations. Such representations are known as volumetric representations where points in space are represented by a position and light properties for the position. Other representations may include densely sampled light fields or other so-called light field representations. For light field representations, a given point in a scene may be linked with different light properties corresponding to different rays passing through the scene point (corresponding to different light rays and ray directions).

However, whereas such representations may be suitable for many different applications and scenarios, they tend to not provide ideal performance, or allow perfect generation of images. They may also in many scenarios result in a higher than preferred data rate and/or processing complexity and/or resource requirements.

Hence, an improved approach for scene representation and processing thereof would be advantageous. In particular, an approach that allows improved operation, increased flexibility, an improved immersive user experience, reduced complexity, facilitated implementation, improved image quality, improved and/or facilitated rendering, improved and/or facilitated scene representation or processing thereof, and/or improved performance and/or operation would be advantageous.

SUMMARY OF THE INVENTION

Accordingly, the Invention seeks to preferably mitigate, alleviate or eliminate one or more of the above mentioned disadvantages singly or in any combination.

According to an aspect of the invention there is provided, an apparatus arranged to generate a data signal describing a three dimensional scene, the apparatus comprising: a generator for generating the data signal to include three dimensional image data providing a representation of the three dimensional scene, the three dimensional image data comprising at least a first image comprising light property values for scene points in the scene; a processor arranged to generate a Lambertian indication for an image region of the first image, the Lambertian indication being indicative of a level of Lambertianness for scene points of the image region; and wherein the generator is arranged to include the Lambertian indication in the data signal.

The invention may provide improved performance and/or operation and/or implementation in many embodiments. It may typically allow an improved representation of the scene allowing, in particular, rendering of more accurate and higher quality view images of the scene.

The approach may be suitable for many different representations. In particular, it may provide additional information and improved view adaptation for volumetric representations of a three dimensional scene as such volumetric formats do not inherently allow for view dependencies to be represented.

The Lambertian indication may be a view dependency indication indicative of a level of view dependency for scene points of the image region.

A light property value for a scene may be any value indicative of a luminance, chrominance, chroma, luma, brightness and/or color for the scene point. The Lambertian indication for the image region may be indicative of a degree of Lambertianness for scene points for which the image region includes a light property value.

The first image may be any two dimensional data structure providing light property values for scene points in the scene. The first image may be a frame of a video sequence. The first image may be a projection image for a point cloud, an image corresponding to a viewport of the scene from a capture pose, a multi-plane image providing light property values for different planes or spheres, an image or video atlas, etc.

In many embodiments, a plurality of Lambertian indications may be provided to reflect Lambertianness for different image regions of the first image, and/or for image regions of other images. In some embodiments, the Lambertian indication may be spatially varying and provide indications of Lambertianness of different image regions/ scene regions (including e.g. an image region being a single image sample/ pixel).

In accordance with an optional feature of the invention, the processor is arranged to generate the Lambertian indication in dependence on the three dimensional image data.

This may provide improved performance and/or operation in many embodiments. It may in many embodiments provide an efficient and high performance approach for determining the Lambertian indication.

In accordance with an optional feature of the invention, the processor is arranged to determine light properties in different directions for a scene region represented by the image region; and to determine the Lambertian indication in response to a variation of the light properties for the different directions.

This may provide improved performance and/or operation in many embodiments. It may in many embodiments provide an efficient and high performance approach for determining the Lambertian indication.

In some embodiments, the processor may be arranged to generate the Lambertian indication in response to a comparison of a light output from the image region in different directions.

In accordance with an optional feature of the invention, the Lambertian indication is indicative of a variation in light radiation as a function of direction for the scene points of the image region.

This may provide improved performance and/or operation in many embodiments.

In accordance with an optional feature of the invention, the representation of a three dimensional scene is a multi-view plus depth representation and the first image is an image of a set of multi view images of the multi-view plus depth representation.

The approach may provide particularly advantageous operation and performance for a multi-view plus depth representation. The use of a Lambertian indication with a multi-view plus depth representation may e.g. provide synergistic effects allowing improved view images of the scene to be rendered.

In accordance with an optional feature of the invention, the representation of the three dimensional scene is a multi-planar image representation, and the first image is a plane of the multi-planar image representation.

The approach may provide particularly advantageous operation and performance for a multi-planar image representation. The use of a Lambertian indication with a multi-planar image representation may e.g. provide synergistic effects for a volumetric representation that does not inherently consider or encode any view direction variation.

In accordance with an optional feature of the invention, the representation of the three dimensional scene is a point cloud representation, and the first image comprises light property values for a projection of at least part of the point cloud representation onto an image plane.

The approach may provide particularly advantageous operation and performance for a multi-planar image representation. The use of a Lambertian indication with a multi-planar image representation may e.g. provide synergistic effects for a volumetric representation that does not inherently consider or encode any view direction variation.

The image region may comprise pixels indicative of light radiation for points of the point cloud. The scene points of the image region may be points of the point cloud.

In accordance with an optional feature of the invention, the representation of the three dimensional scene is a representation comprising at least the first image and projection data indicative of a relationship between light property value positions of the first image and positions of corresponding scene points in the three dimensional scene.

This may provide improved performance and/or operation in many embodiments.

A corresponding scene point for light property value position is a scene point for which the light property value at the light property value position provides an indication of a light property value for the scene point. A light property value position may be a pixel position in the first image and a light property value may be a pixel value.

In accordance with an optional feature of the invention, the generator is arranged to receive input three dimensional image data for the three dimensional scene, and to select a subset of the input three dimensional image data to include in the three dimensional image data of the data signal, wherein the selection of the subset is dependent on the Lambertian indication.

This may provide improved performance and/or operation in many embodiments.

In accordance with an optional feature of the invention, the generator is arranged to include the Lambertian indication in a chrominance color channel for an image of the three dimensional image data.

This may provide improved performance and/or operation in many embodiments.

According to an aspect of the invention there is provided an apparatus for rendering a view image of a three dimensional scene, the apparatus comprising: a first receiver arranged to receive a data signal comprising: three dimensional image data providing a representation of the three dimensional scene, the three dimensional image data comprising at least a first image comprising light property values for scene points in the scene; at least one Lambertian indication for an image region of the first image, the Lambertian indication being indicative of a level of Lambertianness of the image region; a receiver arranged to receive a view pose for the three dimensional scene; a renderer arranged to generate a view image for the view pose from the three dimensional image data and in dependence on the Lambertian indication.

The invention may provide improved performance and/or operation and/or implementation in many embodiments. It may typically allow an improved representation of the scene allowing in particular rendering of more accurate and higher quality view images of the scene.

In accordance with an optional feature of the invention, the renderer is arranged to generate a value for a pixel of the view image by blending contributions from a plurality of light property values of the three dimensional image data projecting to a position of the pixel in the view image, the blending for a contribution from a light property value of the image region depending on the Lambertian indication.

This may provide particularly advantageous operation in many scenarios and embodiments. It may often provide an improved perceived image quality, including e.g. often less image noise generated by the blending operation.

A weight of the contribution from the light property value of the image region in the blending/ mixing to generate the value for the pixel of the view image depends on the Lambertian indication for the image region.

In accordance with an optional feature of the invention, the three dimensional image data comprises transparency values and wherein the renderer is arranged to modify at least one transparency value in dependence on the Lambertian indication.

This may provide particularly advantageous operation in many scenarios and embodiments

In accordance with an optional feature of the invention, the renderer is further arranged to modify the at least one transparency value in dependence on a difference between a light direction for a pixel of the at least one transparency value and a direction from a position in the three dimensional scene represented by the pixel and the view pose.

This may provide particularly advantageous operation in many scenarios and embodiments.

According to an aspect of the invention there is provided a method of generating a data signal describing a three dimensional scene, the method comprising: generating the data signal to include three dimensional image data providing a representation of the three dimensional scene, the three dimensional image data comprising at least a first image comprising light property values for scene points in the scene; generating a Lambertian indication for an image region of the first image, the Lambertian indication being indicative of a level of Lambertianness for scene points of the image region; and including the Lambertian indication in the data signal.

According to an aspect of the invention there is provided a method of rendering a view image of a three dimensional scene, the method comprising: receiving a data signal comprising: three dimensional image data providing a representation of the three dimensional scene, the three dimensional image data comprising at least a first image comprising light property values for scene points in the scene; at least one Lambertian indication for an image region of the first image, the Lambertian indication being indicative of a level of Lambertianness of the image region; receiving a view pose for the three dimensional scene; generating a view image for the view pose from the three dimensional image data and in dependence on the Lambertian indication.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

FIG. 1 illustrates an example of an apparatus for generating a data signal providing a representation of a scene in accordance with some embodiments of the invention;
FIG. 2 illustrates an example of an apparatus for rendering an image from a data signal providing a representation of a scene in accordance with some embodiments of the invention; and
FIG. 3 illustrates an example of a processor that may be used to implement an apparatus of FIG. 1 or FIG. 2.

DETAILED DESCRIPTION OF THE EMBODIMENTS

Three dimensional video capture, distribution, and presentation is becoming increasingly popular and desirable in some applications and services. A particular approach is known as immersive video and typically includes the provision of views of a real-world scene, and often a real time event, that allow small viewer movements, such as relatively small head movements and rotations. For example, real-time video broadcast of e.g. a sports event that allows local client based generation of views following small head movements of a viewer may provide the impression of a user being seated in the stands watching the sports event. The user can e.g. look around and will have a natural experience similar to the experience of a spectator being present at that position in the stand. Recently, there has been an increasing prevalence of display devices with positional tracking and three dimensional interaction supporting applications based on three dimensional capturing of real-world scenes. Such display devices are highly suitable for immersive video applications providing an enhanced three dimensional user experience.

In order to provide such services for a real-world scene, a suitable data representation of the scene must be generated and communicated to the devices rendering the views to the end user.

Typically, the scene is captured from different positions and with different camera capture poses being used. As a result, the relevance and importance of multi-camera capturing and e.g. 6DoF (6 Degrees of Freedom) processing is quickly increasing. Applications include live concerts, live sports, and telepresence. The freedom of selecting one's own viewpoint enriches these applications by increasing the feeling of presence over regular video. Furthermore, immersive scenarios can be conceived where an observer may navigate and interact with a live captured scene. For broadcast applications this may require real-time depth estimation on the production side and real-time view synthesis at the client device. Both depth estimation and view synthesis introduce errors and these errors depend on the implementation details of algorithms.

In the field, the terms placement and pose are used as a common term for position and/or direction/orientation. The combination of the position and direction/ orientation of e.g., an object, a camera, a head, or a view may be referred to as a pose or placement. Thus, a placement or pose indication may comprise six values/components/ degrees of freedom with each value/component typically describing an individual property of the position/ location or the orientation/ direction of the corresponding object. Of course, in many situations, a placement or pose may be considered or represented with fewer components, for example if one or more components is considered fixed or irrelevant (e.g. if all objects are considered to be at the same height and have a horizontal orientation, four components may provide a full representation of the pose of an object). In the following, the term pose is used to refer to a position and/or orientation which may be represented by one to six values (corresponding to the maximum possible degrees of freedom). The term pose may be replaced by the term placement. The term pose may be replaced by the term position and/or orientation. The term pose may be replaced by the term position and orientation (if the pose provides information of both position and orientation), by the term position (if the pose provides information of (possibly only) position, or by orientation (if the pose provides information of (possibly only) orientation.

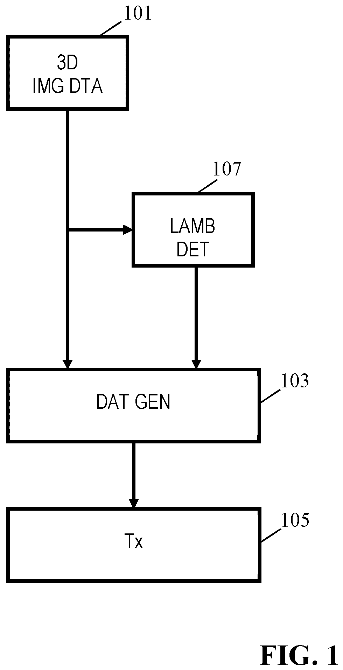

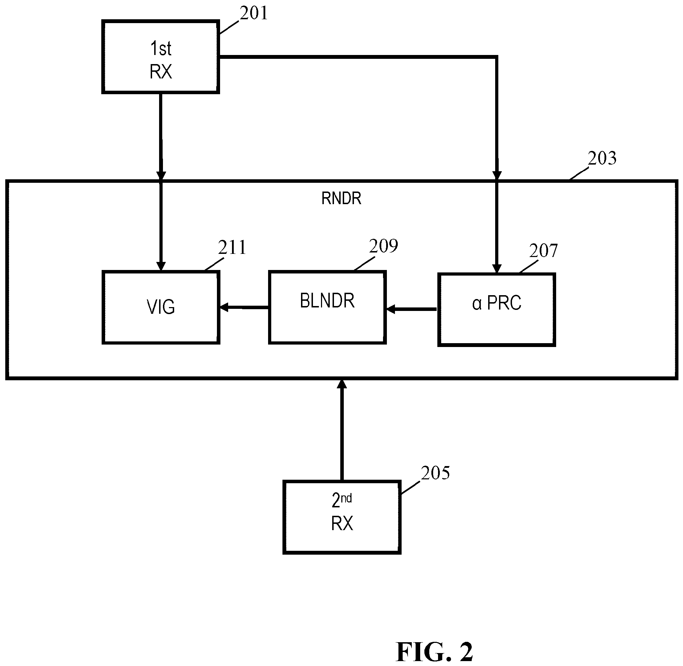

FIG. 1 illustrates an example of a data signal generating apparatus which is arranged to generate a data signal comprising a representation of a three dimensional scene. FIG. 2 illustrates an example of a rendering apparatus for rendering view images of a three dimensional scene from a data signal comprising a representation of the scene. Specifically, in the example, the signal generator apparatus generates a data signal which is provided to the rendering apparatus of FIG. 2 which proceeds to render view images for the scene based on the scene representation data of the signal generated by the signal generating apparatus of FIG. 1. The approach will be described with reference to this example.

The data signal generating apparatus comprises an image data source 101 which is arranged to provide three dimensional image data that provides a representation of a three dimensional scene. The image data source 101 may for example comprise a store or memory in which the three dimensional image data is stored and from which it can be retrieved. In other embodiments, the image data source 101 may receive or retrieve the three dimensional image data from an external (or other internal source). In many embodiments, the image data source 101 may for example be received from a video capture system that includes video cameras capturing a real world scene, e.g. in real time.

The three dimensional image data provides a suitable representation of the scene using a suitable image or typically video format/ representation. In some embodiments, the image data source 101 may receive image data from different sources and/or in different formats and from this generate the three dimensional image data e.g. by converting or processing the received scene data. For example, image and depth may be received from remote cameras and may be processed to generate a video representation in accordance with a given format. In some embodiments, the image data source 101 may be arranged to generate the three dimensional image data by evaluating a model of the scene.

The three dimensional image data is provided in accordance with a suitable three dimensional data format/ representation. The representation may for example be a multi-view and depth, multi-layer (multi-plane, multi-spherical), mesh model, and/or point cloud representation. Further, in the described example, the three dimensional image data is specifically video data and may thus include a temporal component.

The three dimensional image data is provided in accordance with a representation that includes one or more images. In many embodiments where the three dimensional image data represents video data, the three dimensional image data may comprise time sequential images. An image may be any two-dimensional structure of light property values for scene points of the scene.

An image may for example include a view image of the scene, a frame of a video signal, a video atlas, a picture, a coded picture, a decoded picture etc.

The light property values may for example be brightness, color, chroma, luma, chrominance and/or luminance values. A light property value for a scene point may provide an indication of light radiated from that scene point in at least one direction. In some representations, each scene point may be associated with a plurality of light property values. A scene point represented by a light property value of the 3D image data may also be referred to as a scene sample, image sample, or just sample.

The image data source 101 is coupled to a generator 103 which is arranged to generate a data signal, such as a bitstream, that includes the three dimensional image data. The data signal/bitstream is typically a (three dimensional) video data signal/ bitstream. The generator 103 may specifically generate a bitstream that is accordance with a suitable transport format, and which includes the three dimensional image data.

The generator 103 is coupled to a transmitter 105 which is arranged to transmit the data signal to remote sources. The transmitter 105 may for example include a network interface to allow the data signal to be transmitted to a suitable destination via the network. The network may be, or may include, the Internet.

The rendering apparatus comprises a first receiver 201 which is arranged to receive the data signal from the data signal generating apparatus. The receiver may be any suitable functionality for receiving the three dimensional image data in accordance with the preferences and requirements of the individual embodiment. The first receiver 201 may specifically comprise a network interface allowing the image data source 101 to be received via a network, such as (or including) the Internet.

The first receiver 201 is arranged to extract the three dimensional image data from the received data signal. The first receiver 201 is coupled to a renderer 203 which is arranged to generate view images for different view poses from the three dimensional image data.

The rendering apparatus of FIG. 2 further comprises a second receiver 205 which is arranged to receive a view pose for a viewer/ user (and specifically a view pose in the three dimensional scene). The view pose represents a position and/or orientation from which the viewer views the scene, and it may specifically provide a pose for which views of the scene should be generated.

It will be appreciated that many different approaches for determining and providing a view pose is known and that any suitable approach may be used. For example, the second receiver 205 may be arranged to receive pose data from a VR headset worn by the user, from an eye tracker, etc. In some embodiments, a relative view pose may be determined (e.g. the changes from an initial pose may be determined) and this may be related to a reference pose, such as for example a camera pose or a center of the capture pose region.

The second receiver 205 is coupled to the renderer 203 which is arranged to generate view frames/ images from the three dimensional image/video data where the view images are generated to represent the view of the three dimensional scene from the view pose. Thus, the renderer 203 may specifically generate a video stream of view images/ frames for the three dimensional scene from the received three dimensional image data and the view pose. In the following, the operation of the renderer 203 will be described with reference to the generation of a single image. However, it will be appreciated that in many embodiments the image may be part of a sequence of images and specifically may be a frame of a video sequence. Indeed, the described approach may be applied to generate a plurality, and often all, frames/ images of an output video sequence.

It will be appreciated that often a stereo video sequence may be generated comprising a video sequence for the right eye and a video sequence for the left eye. Thus, if the images are presented to the user, e.g. via an AR/VR headset, it will appear as if the three dimensional scene is seen from the view pose. In another example, images are presented to the user using a tablet with tilt sensor, and a monoscopic video sequence may be generated. In yet another example, multiple images are weaved or tiled for presentation on an autostereoscopic display.

The renderer 203 may perform a suitable image synthesis/ generation operation for generating view images for the specific representation/ format of the three dimensional image data (or indeed in some embodiments, the three dimensional image data may be converted into a different format from which the view image is generated).

For example, the renderer 203 may for a multi-view+ depth representation typically be arranged to perform view shifting or projection of the received multi-view images based on the depth information. This will typically include techniques such as shifting pixels (changing pixel positions to reflect an appropriate disparity corresponding to parallax changes), de-occlusion (typically based on infilling from other images), combining pixels from different images etc. as will be known to the skilled person.

It will be appreciated that many algorithms and approaches are known for synthesizing images from different three dimensional image data formats and representations and that any suitable approach may be used by the renderer 203.

The image synthesis apparatus may thus generate view images/ video for the scene. Further, as the view pose may change dynamically, corresponding to the user moving around in the scene, the view of the scene may continuously be updated to reflect the changes in the view poses.

In the approach, the three dimensional image data is further supplemented by the inclusions of an Lambertian indication that is indicative of a level of Lambertianness for at least one image region of at least one of the images of the three dimensional image data. The Lambertian indication may be indicative of a degree of view dependency of the visual properties of the image region. The Lambertian indication may be indicative of a degree/level of variation of one or more visual properties/ light properties for the image region as a function of view direction. The Lambertian indication may be indicative of a variation of one or more visual properties for the image region as a function of viewing direction. The Lambertian indication may be indicative of a degree/level of variation of light radiation and/or reflection for the image region as a function of viewing direction. The visual properties may specifically be a luminance and/or chrominance property for the image region.

The data signal generating apparatus accordingly comprises a Lambertian determiner 107 which is arranged to generate a Lambertian indication. The Lambertian determiner 107 is coupled to the data generator 103 which is fed the Lambertian indication and which is arranged to include this in the data signal/ bitstream. The data generator 103 may specifically encode the Lambertian indication and add it to dedicated fields of the bitstream.

The Lambertian indication may be indicative of a variation in light output (from a scene surface/ element/ object/ region represented by the image region) as a function of direction for a scene region represented by the image region.

Lambertian reflectance is the light reflection provided by an ideal diffuse reflecting surface. The apparent brightness of a Lambertian surface to an observer is the same regardless of the observer's angle of view. A fully Lambertian surface will provide the same visual impression regardless of the view direction, such as for example a completely matt white surface that reflects light in all directions. Similarly, a non-collimated light source provides the same light in all directions and thus will have the same visual appearance in all directions. For a non-collimated light source, the light has no visual dependency on viewing direction/ angle. For the purpose of this document, it does not matter if observed light is the result of reflection or emission, and therefore a non-collimated light source is effectively Lambertian. The term Lambertian includes a non-collimated light source and is thus not restricted merely to Lambertian reflection but also includes Lambertian or non-collimated light (source) radiation/ emission.

For many practical reflective surfaces and light sources, there is a degree of view direction sensitivity and some variations in the light may result for variations in the viewer direction. Thus, for such non-Lambertian effects there is some view dependency. The degree of view dependency may vary substantially. For example, the glossier a white wall is, the less Lambertian and the more view dependent the visual impression of the wall will be. Other view-dependent effects, also called non-Lambertian effects, may include:

- Glossy surfaces like marble and wood.
- Hard specular reflections.
- Metallic surfaces.
- Inter-view differences due to polarization, glare, etc.

The data signal generating apparatus is arranged to generate a Lambertian indication that is indicative of the variation in light output as a function of direction for a scene region represented by the image region.

In some embodiments, the Lambertian indication may be received from a given source or may e.g. be generated by manual input, such as e.g. by a person selecting specific image regions and manually assigning a Lambertian level to the regions. In other embodiments, information may be provided on objects in the scene, such as the material of different objects in the scene, and a corresponding Lambertian level may be assigned based on the object.

In some embodiments, the Lambertian determiner 107 is arranged to generate the Lambertian indication in response to the three dimensional image data, and specifically in many embodiments it may be generate the Lambertian indication in dependence on a comparison of light output from the image region in different directions. In many embodiments, the Lambertian determiner 107 may be arranged to determine light radiation in different directions for a scene region represented by the image region. It may then determine the Lambertian indication in dependence a variation of the light radiation for the different directions. The light from the same scene region in the different directions may be compared and a similarity measure may be evaluated. For example, the difference in brightness, color, luminance and/or chrominance may be determined. The higher the determined difference, the less the degree of Lambertianness for the corresponding image region(s). If the light is considered the same for all the different directions, the image region(s) may be considered to be fully Lambertian.

The light in different directions may be determined in different ways in different embodiments, and indeed for different representations of the scene used by the three dimensional image data. For example, for a multi-view plus depth representation, the pixel values corresponding to the same scene point in the different multi-view images may be compared. For a representation comprising multiple point clouds, such as obtained by using one LiDAR for each point cloud, scene points of the multiple point clouds can be registered and compared. For a point cloud captured using a photogrammetry booth with multiple cameras and light sources, the appearance of a scene point in multiple cameras and/or with multiple light conditions, can be compared.

As a specific example, the image sample for which the Lambertiannes is calculated, is associated with multiple other image samples that correspond (approximately) to the same scene point. From this set of image samples, a statistic is calculated based on the color values of these image samples. Suitable statistics are the variance, standard deviation or the value range (max - min), e.g. a higher value indicates more appearance variation. The Lambertianness is then determined by applying a mapping on the statistic, such that a higher variation result in a lower Lambertianness. To calculate the Lambertianness of an image region, the Lambertianness of multiple image samples may be averaged.

Each pixel of the image region may provide at least one light property value for one scene point. The Lambertian indication may indicate the degree to which light from this scene point is dependent on the direction from which it is viewed, i.e. the direction from the view pose to the scene point. The scene point may often correspond to a point on a surface in the scene, and the Lambertian indication may indicate the degree of Lambertianness of that surface.

The Lambertian indication may in some embodiments be a simple binary indication which indicates whether the image region represents a Lambertian surface/ point or a non-Lambertian surface/ point. The Lambertian indication may for a given image region of a given image provide an indication of whether the visual information provided by light property value(s)/ pixel value(s) of the image region is view dependent or not view-dependent.

However, in many embodiments, a more detailed indication may be provided and the Lambertian indication may reflect more levels/ degrees of view dependency for the image region. For example, the Lambertian indication may be a two bit indication that indicates whether the image region represents a surface that is:

- Fully Lambertian (e.g. white wall).
- Somewhat non-Lambertian (e.g. marble floor).
- Quite non-Lambertian (e.g. fire, smoke).
- Fully non-Lambertian (e.g. hard specular reflections).

In other embodiments, more levels may be used and in cases the Lambertian indication may be no less than a 4-bit, 6-bit, or 8 bit value.

In some applications, only a single Lambertian indication for a single image region for a single image may be included in the bitstream. However, in many embodiments, a plurality of Lambertian indications may be included.

In many embodiments, Lambertian indications for a plurality of image regions of the image may be included. Indeed, in some applications, the image may be divided into a plurality of image regions and a Lambertian indication may be provided for each image region indicating the level/ degree of Lambertianness for that image region. Each element of the image may have an associated Lambertian indication.

In some applications, the image region(s) may be predetermined and fixed. For example, the image may be divided into small rectangles and a Lambertian indication may be provided for each rectangle. Indeed, in some cases each region may comprise a single pixel and a Lambertian indication may thus in some embodiments be provided for each pixel of the image.

The bitstream may be generated to include spatially varying Lambertian indications that reflect the Lambertianness of surfaces represented by the different parts of the image. In many embodiments, a Lambertian map may be generated that includes Lambertian indications that correspond/ map to the image. For example, a two dimensional map of Lambertian indications may be provided that has the same resolution as the image. In many embodiments, the resolution of the Lambertian map may be lower than for the image.

In some embodiments, the image may be divided into image region by a dynamic and adaptive process which may depend on the data of the image. For example, segmentation may be performed depending on the image data to divide the image into regions that have similar visual properties. A Lambertian indication may then be provided for each region, or for a subset of the regions. In some embodiments, segmentation may be performed to detect and identify objects with a Lambertian indication being provided on an object by object basis.

Further, in many embodiments, a Lambertian indication or Lambertian indication map may not only be provided for a single image but may be applied for two, more, or all images that are used to represent the three dimensional scene at a given point in time.

Further, for video sequences, Lambertian indications or Lambertian indication maps may be provided for images at different times. In some embodiments, one or more Lambertian indication maps may be provided for each image/ frame of the video sequence. In such cases, the Lambertian indications may for example be determined considering temporal aspects and correlations across different time instants. Similarly, encoding of the Lambertian indications may include e.g. relative encodings. For example, a Lambertian indication map for one image/ frame may be encoded as relative values relative to the Lambertian indication map for the corresponding previous image/ frame.

The renderer 203 is arranged to perform the image generation in response to the Lambertian indication. Specifically, the generation of a pixel value for the view image may for some pixels include a includes a consideration of multiple scene points and light property values (i.e. multiple samples) from the three dimensional image data. For example, when multiple samples project to the same pixel position in the view image, the pixel value may be determined by combining a contribution from the multiple light property values. In many applications, a renderer may perform a blending operation to combine multiple operations.

When such a combination includes a sample/ light property value from the from the image region for which the Lambertian indication is provided, the combination may be dependent on the Lambertian indication. Specifically, in many cases, the determination of a pixel value of the view image may include a combination/merging/ blending of a plurality of light property values of one or more samples of the three dimensional image data (including samples from different images). For example, when projecting scene points for which the three dimensional image data includes light property values to the image positions of the view image, a plurality of scene points may project to the same pixel position. A plurality of scene points of the three dimensional image data may provide visual information for the image position. The plurality of pixel values/ visual data points may then be combined to generate the pixel value of the view image.

This combination may include a consideration of the depth of the corresponding scene points. For example, if the scene points are at vastly different depths, then the foremost scene point may be selected, and the pixel value thereof may be used for the view image pixel value. However, if the depth values are close together, all pixel values and scene points may be relevant, and the view image pixel value may be generated as a blending that includes contributions from a plurality of the scene points. In many cases, the plurality of scene points and light property values may indeed represent the same surface. For example, for a multi-view plus depth representation, the scene points/ pixel values may represent the same surface seen from different view points.

The combination/merging/ blending of a plurality of pixel values may further be in dependence on the Lambertian indication. For example, when the Lambertian indication indicates that one or more of the pixel values are associated with a very high degree of Lambertianness, then the combination may be a selection combination where the pixel value is e.g. selected from a preferred image. In contrast, if the Lambertian indication indicates a low degree of Lambertianness, then the combination may include contributions from all pixel values. For example, the weighting of each contribution may depend on how close a corresponding viewing direction is to the view direction of the multi-view image. Such an approach may provide improved view image quality in many embodiments.

Thus, in many embodiments, the renderer 203 may be is arranged to generate a light property value for a pixel of the view image by blending contributions from different light property values of the three dimensional image data that project to the position of the pixel in the viewport of the view image. For example, the projection of scene points may for the given view pose result in a given position in the view port of the image (and this in a given (pixel) position in the view image). The light property values for the scene points that project to the same pixel may be blended together to generate the image/pixel value for that pixel in the view image. This blending may be such that the contribution from an image value within a given image region being is dependent on the Lambertian indication for that image region.

In many embodiments, the renderer 203 may be arranged to consider a transparency value when synthesizing the view image(s). In many applications, images may be associated with a transparency/ alpha map comprising transparency/ alpha values that are indicative of the transparency of the associated pixels. When combining/ blending different light property values, the blending may weigh the contribution of the different light property values based on the transparency values. For example, for a transparency value of 1 - corresponding to full opaqueness - a contribution of the light property value may be a 100% if it is the foremost pixel. For a transparency value of 0 - corresponding to full transparency - a contribution of the light property value may be a 0%. For transparency values between 0 and 1 - corresponding to partial transparency - the contribution may be between 0% and 100%. Such a blending may allow representation of partially transparent objects, such as frosted glass or some plastics.

In embodiments where a transparency/ alpha value is provided, the renderer 203 may be arranged to modify one or more of the transparency values in response to the Lambertian indication(s). For example, for a given scene point and light property value of the three dimensional image data, the Lambertian indication for the may be used to modify the transparency value for that light property value.

As a specific example, the transparency values may be used to perform the blending/ selection described above. For pixel values that are at substantially the same depth and for which the Lambertianness is high, one pixel may be selected by setting the transparency value to indicate no transparency whereas for one with less Lambertianness it may be set to a lower level to allow blending between different values.

As another example, a more gradual modification of the transparency based on the degree of Lambertianness by e.g. keeping the transparency unaltered for full Lambertianness, and increasing the transparency (i.e. lowering the opaqueness) in accordance with having both a lower Lambertianness value and a larger difference between the original view pose and the virtual view pose.

In the example of FIG. 2, the renderer 203 accordingly comprises an alpha processor 207 which receives the Lambertian indications and transparency values. It may then proceed to modify the transparency values based on the Lambertian indications. The alpha processor 207 is coupled to a blender 209 which is arranged to blend multiple light property values to generate a pixel value for the view image where the blending is dependent on the transparency values. The blender 209 may further comprise functionality for performing relevant projection operations to determine the samples of the three dimensional image data to include in the blending for a given pixel of the view image. The blender is further coupled to a view image generator 211 which generates the view image by combining the individual pixel values.

As a specific example which may be suitable for many types of representations (e.g. including multi-view, video-based point cloud, meshes etc.) blending of image values/ samples that are at a similar depth in the viewport of the view image may be using a transparency (alpha) value that may be modified depending on Lambertian indications. E.g. if a Lambertian indication is provided but with no transparency indicated (fully opaque), then the output of this blending operation may be a single opaque value (R,G,B, alpha =1). This may be achieved by scaling the alpha values of the contributions. Otherwise, the transparency/ alpha values may also be blended, for instance using a saturating addition operation (to constrain alpha to [0, 1] range).

In many embodiments, the Lambertian indication may have little effect or indeed not be considered if only a single sample/ image value projects to a given position in the view image viewport. However, when multiple samples project (sufficiently close) to the same scene point, then the contributions may typically advantageously be blended. In many embodiments, the renderer 203 may be able to distinguish scene points along the same ray (one in front of the other), and only scene points of a similar depth may typically be blended.

A specific example of a possible approach for modifying a transparency value in dependence on the Lambertian indication is the following:

$$\alpha(\boldsymbol{x},\beta) = \alpha_0(\boldsymbol{x})e^{c_1\beta L(\boldsymbol{x})+c_2}$$

where:

- $x$ is an integer or fractional sample coordinate in the scene.
- $\alpha_0$ (x) is the value of the transparency component or automatically calculated transparency value based on texture and geometry components (rendering in two layers). When transparency information is absent, $\alpha_0(\boldsymbol{x}) = 1$,
- $L(\boldsymbol{x})$ is the value of the Lambertian indication at position $\boldsymbol{x}$.
- $\beta$ is a measure of the difference in ray direction between the sample and the viewport. A given sample of the three dimensional image data may provide a light property value for the scene. Such values are typically explicitly or implicitly associated with a ray direction. For example, for an image of a multi-view representation, the ray direction is from the scene point of the sample to the capture point. For many images, the ray direction may be perpendicular to the image plane. For some representations, such as a point cloud, multiple light property values may be provided for each point, and each of these may be associated with a ray direction. $\beta$ may be a value that reflects the difference between the ray direction for the light property value/ sample and the ray direction from the corresponding scene point to the view pose of the view image.
- The term $e^{c1\beta L(x)+c2}$ for some constants $c_1$ and $c_2$ is an example equation for the modifying effect of the Lambertian indication on the transparency value. An alternative may be a piecewise linear curve of which the coefficients are predetermined or transmitted. Also, the exponent may be replaced with another e.g. non-linear function, such as a scaled sigmoid.

There are multiple ways to encode and derive the ray difference value $\beta$, and this may typically depend on the volumetric representation that is chosen. The ray difference value $\beta$ always depends on the viewport/ view pose for the view image. Typically, the ray difference value $\beta$ may be a positive angle, a value related to this, e.g. $b = \sin \beta$.

For a perspective and/or orthographic projection representation, such as a MPEG Immersive Video (MIV), the

ray difference value $\beta$ may be determined as the angle between two vectors, where the first vector is from the cardinal point of the source view to the scene point, and the second vector is from the viewport/ view pose (cardinal point of the virtual camera for which the view image is generated) to the scene point.

For some orthographic projections, such as MIV or some examples of point cloud representations, the ray difference value $\beta$ may be determined is an angle between two vectors, where the first vector is the normal vector of the orthographic plane, and the second vector is from the viewport/ view pose (cardinal point of the virtual camera for which the view image is generated) to the scene point.

In some embodiments, additional metadata may be provided for the three dimensional image data indicating ray directions for the samples of the three dimensional image data. Such metadata may for example include a table with either source view positions or direction vectors. The metadata for an image region may then include an identity or index into the table. The ray difference value $\beta$ may then be determined based on a ray direction for a given sample relative to a direction to the view pose.

The approach may provide advantageous operation and performance in many scenarios and applications. In particular, the approach may provide improved view images to be generated in many scenarios. The approach may result in a lower bit rate at a given visual quality level of the view images. The approach may result in a lower pixel rate at a given visual quality level of the view images. The approach may result in a lower rendering complexity in terms of instruction count or battery consumption at a given quality level of the view images.

The approach further allows efficient implementation and operation. The approach may in many cases be implemented with low complexity and with a relatively low computational overhead. Further, relatively few modifications are needed to many existing devices and systems and thus a high degree of backwards compatibility and simple modification can typically be achieved.

The approach may be suitable for a range of different representations, such as e.g. multi-view and depth representations/ formats as described above.

The described approach may be highly suitable for a representation of the scene being one that comprises one, or typically more, images with pixels that indicate a light property/ light radiation intensity and which in addition comprises projection data indicative of a relationship between pixels of the images and a spatial position in the three dimensional scene. Thus, a representation may be used wherein spatial/ geometric information is implicitly and/or explicitly provided that relates the image pixels to scene points. Such data may effectively be used to determine the suitable rendering operations, such as specifically the blending and determination of transparency values as described above. The resulting transparency values may then be used to perform the blending operation.

The approach may in particular be suitable for volumetric representations such as a multi planar image representation or a point cloud representation. A volumetric representation may specifically be a representation that describes the geometry and attributes (e.g. colour, reflectance, material) of one or more objects within volume. An issue with pure volumetric representations is that they typically do not, and often cannot, represent view-dependent/ non-Lambertian effects. The described approach allows communication and rendering of such effects also for volumetric representations.

In many embodiments, a multi planar image representation may be used and the image comprising the image region for which the Lambertian indication is provided may be a plane of the multi planar image representation. In particular, each plane of a multi-planar image will typically have only a few image regions that are not fully translucent. These image regions of one or more planes can be packed together into an atlas, and this atlas can have an image (or video) component for each attribute of the multi-planar image. Typically, the attributes are color and transparency. Typically, only specific regions in a scene are non-Lambertian, and only some of the image regions correspond to these scene regions. These specific image regions can be packed multiple times, with a different indication of original view pose. This approach thus enables the transmission of non-Lambertian effects with a modest increase in atlas size.

In many embodiments, a point cloud representation may be used and the image comprising the image region for which the Lambertian indication is provided may be a (partial) projection of the point cloud representation onto an image plane. The image may be an atlas comprising patches of pixels indicative of light radiation for points of the point cloud. In particular, the atlas encoding the point cloud will typically have only a few patches that correspond to non-Lambertian scene regions. These specific patches can be packed multiple times into the atlas, with a different indication of original view pose. This approach thus enables the transmission of non-Lambertian effects with a modest increase in atlas size.

In some embodiments, the image data source 203 may be arranged to receive input three dimensional image data for the scene and then proceed to select a subset of this to be included in the data signal/ bitstream. The image data source 203 may be arranged to select this subset based on the Lambertian indication. Specifically, for a scene region for which it is indicated that the Lambertianness is relatively high, and thus the view dependency is low, the amount of alternative data representing that scene region in the bitstream may be reduced substantially relative to if the region is indicated to have a low level of Lambertianness .

As a specific example, for a multi-view plus depth representation, a given surface may be represented by different images corresponding to different view/ capture positions. If the surface is indicated to be fully Lambertian, data may only be included from a single of the multi-view images. If the surface is indicated to be the opposite, data may be included from all of the received multi-view images. For Lambertianness between these extremes, data may for example be included from only some of the multi-view images.

As another example, for specular highlights and mirror surfaces, all available (or in some cases a (large) subset) multi-view images may be included and the low Lambertianness indication will cause the renderer to use predominantly the image that is nearest in view pose to the view pose of the viewport, to render the viewport.

The Lambertian indications may be included in the data signal in any suitable way. In many embodiments, the Lambertian indications may be included as metadata in dedicated fields of the data signal. For example, Lambertian indication maps may be included for each image of the representation.

In some embodiments, the generator 103 may be arranged to include the Lambertian indication(s) in a chrominance color channel for an image of the three dimensional image data. The Lambertian indications may in some embodiments be packed into the channels of a video component. Such an approach may provide a highly efficient approach for communicating the Lambertian indications.

For example, the described approach may be highly suitable for representations in accordance with the Visual Volumetric Video-based Coding (V3C) standards that are under development.

For such applications, the current data format may be modified to include the Lambertian indications in a video component data field. For V3C, the data format and packing_information(j) syntax structure may be found in ISO/IEC DIS 23090-5(2E):2021 "V3C". The packing information explains how multiple video components are packed into a single video bitstream. The described approach may be modified as indicated below to enable packing multiple components at the same location but in a different channel.

In the case of video other than 4:4:4, the video component that needs to have the highest resolution may be in the first component, and the other video components may be in subsequent channels. For instance:

- α-component --> 0 (Y/Luma)
- Lambertian indication-component --> 1 (Cb/Blue)
- geometry component --> 2 (Cr/Red)

The proposed syntax change may leave this choice to the encoder.
The described syntax may be modified to include the following:

| | |
|---|---|
| if( vps_region_dimension_offset_enabled_flag) | |
| **pin_region_dimension_offset**[ j ][ i ] | ue(v) |

Resulting in a full syntax of:

| packing_information( j ) { | Descriptor |
|---|---|
| **pin_codec_id**[ j ] | u(8) |
| pin_occupancy_**present_flag**[ j ] | u(1) |
| **pin_geometry_present_flag**[ j ] | u(1) |
| pin_attribute_**present_flag**[ j ] | u(1) |
| if(pin_occupancy_present_flag[ j ] ) { | |
| **pin_occupancy_2d_bit_depth_minus1**[ j ] | u(5) |
| pin_occupancy_MSB_**align_flag**[ j ] | u(1) |
| pin_lossy_occupancy_compression_**threshold**[ j ] | u(8) |
| } | |
| if( pin_geometry_present_flag[ j ] ) { | |
| **pin_geometry_2d_bit_depth_minus1**[ j ] | u(5) |
| pin_**geometry_MSB_align_flag**[ j ] | u(1) |
| **pin_geometry_3d_coordinates_bit_depth_minus1**[ j ] | u(5) |
| } | |

(continued)

| | |
|---|---|
| if( pin_attribute_present_flag[ j ] ) { | |
| **pin_attribute_count**[ j ] | u(7) |
| for( i = 0; i < **pin_attribute_count**[ j ]; i++) { | |
| **pin_attribute_type_id**[ j ][ i ] | u(4) |
| **pin_attribute_2d_bit_depth_minus1**[ j ][ i ] | u(5) |
| **pin_attribute**_MSB_align_**flag**[ j ][ i ] | u(1) |
| **pin_attribute_map_absolute_coding_persistence_flag**[ j ][ i ] | u(1) |
| d = **pin_attribute_dimension_minus1**[ j ][ i ] | u(6) |
| if( d == 0 ){ | |
| m = pin_attribute_dimension_partitions_minus1[ j ][ i ] = 0 | |
| else | |
| m = pin_attribute_**dimension_partitions_minus1**[ j ][ i ] | u(6) |
| for( k = 0; k < m; k++) { | |
| if(k + d == m ) | |
| n = pin_attribute_partition_channels__minus1[ j ][ i ][ k ] = 0 | |
| else | |
| n = **pin_attribute_partition_**channels_minus1[ j ][ i ][ k ] | ue(v) |
| d -= n + 1 | |
| } | |
| pin_attribute_partition_channels_minus1[ j ][ i ][ m ] = d | |
| } | |
| } | |
| **pin_regions_count_minus1**[ j ] | ue(v) |
| for( i = 0; i <= pin_regions_count_minus 1[ j ]; i++) { | |
| pin_region_tile_id[ j ][ i ] | u(8) |
| **pin_region_type_id_minus2[ j ][ i ]** | u(2) |
| if(vps_region_dimension_offset_enabled_flag) | |
| **pin_region_dimension_offset[** j ][ i ] | ue(v) |
| pin_region_top_left_x [ j ][ i ] | u(16) |
| pin_region_top_left_y[ j ][ i ] | u(16) |
| pin_region _ width _**minus1**[ j ][ i ] | u(16) |
| **pin_region_height_minus1**[ j ][ i ] | u(16) |
| pin_region_unpack_top_left_**x**[ j ][ **i ]** | u(16) |
| pin_region_unpack_top_left_y[ j ][ i ] | u(16) |
| pin region rotation _**flag**[ j ][ i ] | u(1) |
| if(pin_region_type_id_minus2[j][ **i** ] + 2 == V3C_AVD \|\| pin_region_type_id_minus2[ j][ **i** ] + 2 == V3C_ GVD ) { | |
| pin_region_map_index[ j ][ **i** ] | u(4) |
| pin region _auxiliary _data _**flag[**j][ **i** ] | u(1) |

(continued)

| | |
|---|---|
| } | |
| if(pin _region_type_id_minus2[j][ **i**] + 2 == V3C_AVD ) { | |
| **pin_region_attr_index[**j][ **i**] | u(7) |
| k = pin _region_attr_index[j][**i**] | |
| if(pin attribute dimension minus 1[j] [k] > 0) { | |
| **pin_region_attr_partition_index[**j][ i] | u(5) |
| } | |
| } | |
| } | |
| } | |

The purpose of the vps_region_dimension_offset_enabled_flag is to maintain backwards compatibility. It can for instance be added to the V3C parameter set as indicated below. If more flags were introduced, then instead there could be a vps_v3c3e_flag that in turn enables the presence of the vps region _dimension _offset_enabled flag at another bitstream position.

| v3c_parameter_set( numBytesInV3CPayload ) { | Descriptor |
|---|---|
| profile_tier_level() | |
| **vps_v3c_parameter_set_id** | u(4) |
| **vps_reserved_zero_8bits** | u(8) |
| vps_atlas_count _minusl | u(6) |
| for( k = 0; k < vps _atlas_count_minus1+ 1; k++ ) { | |
| **vps_atlas_id[**k] | u(6) |
| j = vps _atlas_id[k] | |
| vps _frame _**width[**j] | ue(v) |
| vps _frame _**height[**j] | ue(v) |
| vps_map_count_minus1[j] | u(4) |
| if(vps map count minus 1 [j] > 0) | |
| vps _multiple _map _streams _**present_flag[**j] | u(1) |
| vps_map_absolute_coding_enabled_flag[j ][ 0 ] = 1 | |
| vps _mapindex _diff[j][ 0] = 0 | |
| for( i = 1; i <= vps _map_count_minus 1 [j]; i++) { | |
| if(vps_multiple_map_streams_present_flag[j ]) | |
| **vps_map_absolute_coding_enabled_flag[**j][ i] | u(1) |
| else | |
| vps_map_absolute_coding_enabled_flag[j ][ **i**] = 1 | |
| if(vps_map_absolute_coding_enabled_flag[ j][ **i**] == 0) { | |
| **vps_map_predictor_index_diff[**j][ i] | ue(v) |
| } | |
| } | |

(continued)

| | |
|---|---|
| **vps_auxiliary_** video_present_flag[ j] | u(1) |
| vps_occupancy_video_present_flag[ j] | u(1) |
| vps_geometry_video_present_flag[ j] | u(1) |
| vps _attribute video _present_flag[j] | u(1) |
| if(vps _occupancy_video_present_**flag[j]**) | |
| occupancy_information( j) | |
| if( vps_geometry_video_present_flag[ j ]) | |
| geometry _information( j) | |
| if(vps_attribute_video_present_flag[ j]) | |
| attribute_information(j) | |
| } | |
| vps_extension_present_flag | u(1) |
| if(vps_extension_present_flag) { | |
| vps _packing _information _present _flag | u(1) |
| vps_miv_extension_present_flag | u(1) |
| vps_region_dimension_offset_present_flag | u(1) |
| vps_extension_5bits | u(5) |
| vps _extension_6bits | u(6) |
| } | |
| if(vps_packing_information_present_flag) { | |
| for( k = 0; k <= vps_atlas_count_minus1; k++ ) { | |
| j = vps_atlas_id[ k] | |
| vps_packed_video_present_flag[ j ] | |
| if(vps_packed_video_present_flag[ j]) | |
| packing_information(j) | |
| } | |
| } | |
| if(vps_miv_extension_present_flag ) | |
| vps_miv_extension() | |
| if(vps_extension_6bits) { | |
| vps_extension_length_minus1 | ue(v) |
| for( j = 0; j < vps _extension _length_minusl + 1; j++ ) { | |
| vps_extension_data_byte | u(8) |
| } | |
| } | |
| byte _alignment( ) | |
| } | |

The data signal generating apparatus and the rendering apparatus may specifically be implemented in suitably programmed processors. An example of a suitable processor is provided in the following.

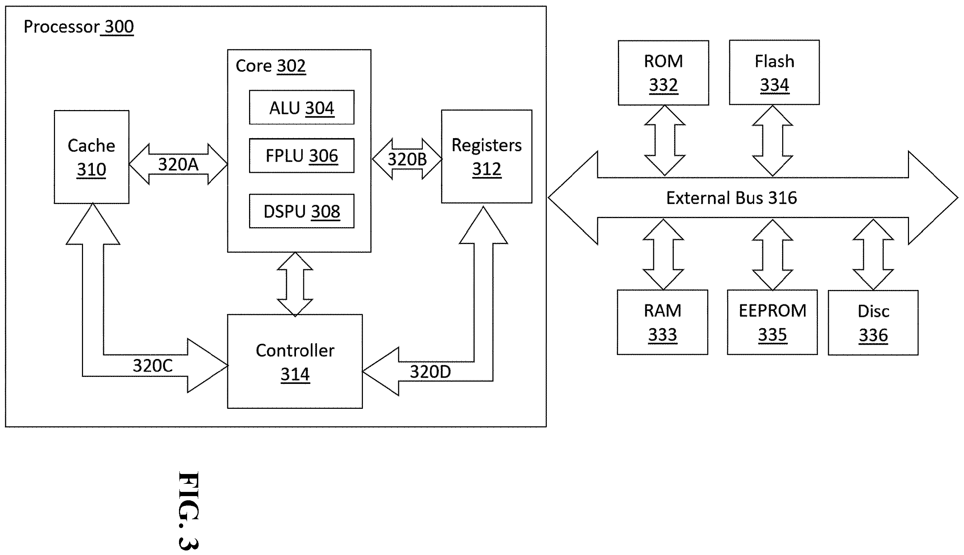

FIG. 3 is a block diagram illustrating an example processor 300 according to embodiments of the disclosure. Processor 300 may be used to implement one or more processors implementing the data signal generating apparatus of FIG. 1 or the rendering apparatus of FIG. 2. Processor 300 may be any suitable processor type including, but not limited to, a microprocessor, a microcontroller, a digital signal processor (DSP), a field programmable array (FPGA) where the FPGA has been programmed to form a processor, a graphical processing unit (GPU), an application specific circuit (ASIC) where the ASIC has been designed to form a processor, or a combination thereof.

The processor 300 may include one or more cores 302. The core 302 may include one or more arithmetic logic units (ALU) 304. In some embodiments, the core 302 may include a floating point logic unit (FPLU) 306 and/or a digital signal processing unit (DSPU) 308 in addition to or instead of the ALU 304.

The processor 300 may include one or more registers 312 communicatively coupled to the core 302. The registers 312 may be implemented using dedicated logic gate circuits (e.g., flip-flops) and/or any memory technology. In some embodiments the registers 312 may be implemented using static memory. The register may provide data, instructions and addresses to the core 302.

In some embodiments, processor 300 may include one or more levels of cache memory 310 communicatively coupled to the core 302. The cache memory 310 may provide computer-readable instructions to the core 302 for execution. The cache memory 310 may provide data for processing by the core 302. In some embodiments, the computer-readable instructions may have been provided to the cache memory 310 by a local memory, for example, local memory attached to the external bus 316. The cache memory 310 may be implemented with any suitable cache memory type, for example, metal-oxide semiconductor (MOS) memory such as static random access memory (SRAM), dynamic random access memory (DRAM), and/or any other suitable memory technology.

The processor 300 may include a controller 314, which may control input to the processor 300 from other processors and/or components included in a system and/or outputs from the processor 300 to other processors and/or components included in the system. Controller 314 may control the data paths in the ALU 304, FPLU 306 and/or DSPU 308. Controller 314 may be implemented as one or more state machines, data paths and/or dedicated control logic. The gates of controller 314 may be implemented as standalone gates, FPGA, ASIC or any other suitable technology.

The registers 312 and the cache 310 may communicate with controller 314 and core 302 via internal connections 320A, 320B, 320C and 320D. Internal connections may implemented as a bus, multiplexor, crossbar switch, and/or any other suitable connection technology.

Inputs and outputs for the processor 300 may be provided via a bus 316, which may include one or more conductive lines. The bus 316 may be communicatively coupled to one or more components of processor 300, for example the controller 314, cache 310, and/or register 312. The bus 316 may be coupled to one or more components of the system, such as components BBB and CCC mentioned previously.

The bus 316 may be coupled to one or more external memories. The external memories may include Read Only Memory (ROM) 332. ROM 332 may be a masked ROM, Electronically Programmable Read Only Memory (EPROM) or any other suitable technology. The external memory may include Random Access Memory (RAM) 333. RAM 333 may be a static RAM, battery backed up static RAM, Dynamic RAM (DRAM) or any other suitable technology. The external memory may include Electrically Erasable Programmable Read Only Memory (EEPROM) 335. The external memory may include Flash memory 334. The External memory may include a magnetic storage device such as disc 336. In some embodiments, the external memories may be included in a system.

The invention can be implemented in any suitable form including hardware, software, firmware, or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

In accordance with standard terminology in the field, the term pixel may be used to refer to a property associated with the pixel, such as a light intensity, depth, position of a part/ element of the scene represented by the pixel. For example, a depth of a pixel, or a pixel depth, may be understood to refer to the depth of the object represented by that pixel. Similarly, a brightness of a pixel, or a pixel brightness, may be understood to refer to the brightness of the object represented by that pixel.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

**Claims**

1. An apparatus arranged to generate a data signal describing a three dimensional scene, the apparatus comprising:

   a generator (101) for generating the data signal to include three dimensional image data providing a representation of the three dimensional scene, the three dimensional image data comprising at least a first image comprising light property values for scene points in the scene;
   a processor (107) arranged to generate a Lambertian indication for an image region of the first image, the Lambertian indication being indicative of a level of Lambertianness for scene points of the image region; and wherein
   the generator (103) is arranged to include the Lambertian indication in the data signal.

2. The apparatus of claim 1 wherein the processor (107) is arranged to determine light properties in different directions for a scene region represented by the image region; and to determine the Lambertian indication in response to a variation of the light properties for the different directions.

3. The apparatus of any previous claim wherein the Lambertian indication is indicative of a variation in light radiation as a function of direction for the scene points of the image region.

4. The apparatus of any previous claim wherein the representation of a three dimensional scene is a multi-view plus depth representation and the first image is an image of a set of multi view images of the multi-view plus depth representation.

5. The apparatus of any previous claim wherein the representation of the three dimensional scene is a multi-planar image representation, and the first image is a plane of the multi-planar image representation.

6. The apparatus of any previous claim wherein the representation of the three dimensional scene is a point cloud representation, and the first image comprises light property values for a projection of at least part of the point cloud representation onto an image plane.

7. The apparatus of any previous claim wherein the representation of the three dimensional scene is a representation comprising at least the first image and projection data indicative of a relationship between light property value positions of the first image and positions of corresponding scene points in the three dimensional scene.

8. The apparatus of any previous claim wherein the generator (101) is arranged to receive input three dimensional image data for the three dimensional scene, and to select a subset of the input three dimensional image data to include in the three dimensional image data of the data signal, wherein the selection of the subset is dependent on the Lambertian indication.

9. The apparatus of any previous claim wherein the generator (101) is arranged to include the Lambertian indication in a chrominance color channel for an image of the three dimensional image data.

10. An apparatus for rendering a view image of a three dimensional scene, the apparatus comprising:

    a first receiver (201) arranged to receive a data signal comprising:

three dimensional image data providing a representation of the three dimensional scene, the three dimensional image data comprising at least a first image comprising light property values for scene points in the scene;

at least one Lambertian indication for an image region of the first image, the Lambertian indication being indicative of a level of Lambertianness of the image region;

a receiver (205) arranged to receive a view pose for the three dimensional scene;

a renderer (203) arranged to generate a view image for the view pose from the three dimensional image data and in dependence on the Lambertian indication.

11. The apparatus of claim 10 wherein the renderer (203) is arranged to generate a value for a pixel of the view image by blending contributions from a plurality of light property values of the three dimensional image data projecting to a position of the pixel in the view image, the blending for a contribution from a light property value of the image region depending on the Lambertian indication.

12. A method of generating a data signal describing a three dimensional scene, the method comprising:

generating the data signal to include three dimensional image data providing a representation of the three dimensional scene, the three dimensional image data comprising at least a first image comprising light property values for scene points in the scene;

generating a Lambertian indication for an image region of the first image, the Lambertian indication being indicative of a level of Lambertianness for scene points of the image region; and

including the Lambertian indication in the data signal.

13. A method of rendering a view image of a three dimensional scene, the method comprising:

receiving a data signal comprising:

three dimensional image data providing a representation of the three dimensional scene, the three dimensional image data comprising at least a first image comprising light property values for scene points in the scene;

at least one Lambertian indication for an image region of the first image, the Lambertian indication being indicative of a level of Lambertianness of the image region;

receiving a view pose for the three dimensional scene;

generating a view image for the view pose from the three dimensional image data and in dependence on the Lambertian indication.

14. A computer program product comprising computer program code means adapted to perform all the steps of claims 12 or 13 when said program is run on a computer.

15. A data signal providing a representation of a three dimensional scene, the data signal comprising:

three dimensional image data providing a representation of a three dimensional scene, the three dimensional image data comprising at least a first image provide visual information of the scene;

at least one Lambertian indication for an image region of the first image, the Lambertian indication being indicative of a level of Lambertianness of the image region.

101

3D
IMG DTA

107

LAMB
DET

DAT GEN
103

Tx
105

FIG. 1

**FIG. 2**

FIG. 3

Europäisches
Patentamt

European
Patent Office

Office européen
des brevets

# EUROPEAN SEARCH REPORT

Application Number

**EP 22 18 0394**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 691 249 A1 (KONINKLIJKE PHILIPS NV [NL]) 5 August 2020 (2020-08-05) * claims 1, 12 * * paragraph [0001] * * paragraph [0053] * * paragraph [0095] – paragraph [0107] * * paragraph [0080] – paragraph [0083] * * paragraph [0021] * ----- | 1–15 | INV. H04N13/117 H04N13/178 H04N13/194 |

TECHNICAL FIELDS
SEARCHED          (IPC)

H04N

The present search report has been drawn up for all claims

| Place of search | Date of completion of the search | Examiner |
|---|---|---|
| The Hague | 30 November 2022 | Benzeroual, Karim |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.......................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 18 0394

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2022

| Patent document cited in search report | | Publication date | Patent family member(s) | | Publication date |
|---|---|---|---|---|---|
| EP 3691249 | A1 | 05-08-2020 | CA | 3127847 A1 | 06-08-2020 |
| | | | CN | 113366825 A | 07-09-2021 |
| | | | EP | 3691249 A1 | 05-08-2020 |
| | | | EP | 3918782 A1 | 08-12-2021 |
| | | | JP | 2022518285 A | 14-03-2022 |
| | | | KR | 20210118458 A | 30-09-2021 |
| | | | TW | 202034688 A | 16-09-2020 |
| | | | US | 2022165015 A1 | 26-05-2022 |
| | | | WO | 2020156827 A1 | 06-08-2020 |

EPO FORM P0459

For more details about this annex : see Official Journal of the European Patent Office, No. 12/82